Europäisches Patentamt

European Patent Office

Office européen des brevets

(19)

(11) Publication number: **0 167 150**
**A1**

(12)

# EUROPEAN PATENT APPLICATION

(21) Application number: **85108197.6**

(22) Date of filing: **02.07.85**

(51) Int. Cl.⁴: **B 23 K 9/20**

(30) Priority: **02.07.84 JP 135253/84**

(43) Date of publication of application:
**08.01.86 Bulletin 86/2**

(84) Designated Contracting States:
**DE FR GB IT NL SE**

(71) Applicant: **Kabushiki Kaisha Nippon Suichu Sagyo**
**951-1 Toriyama-cho Kohoku-ku**
**Yokohama-shi Kanagawa-ken(JP)**

(72) Inventor: **Kon, Toshiharu c/o K.K. Nippon Suichu Sagyo**
**951-1 Toriyama-cho Kohoku-ku**
**Yokohama-shi, Kanagawa-ken 222(JP)**

(74) Representative: **Glawe, Delfs, Moll & Partner**
**Patentanwälte**
**Postfach 26 01 62 Liebherrstrasse 20**
**D-8000 München 26(DE)**

(54) **Process for stud welding and welding gun.**

(57) In the process for welding a stud bolt (10) on a metal base (30) of a magnetic material the welding is carried out with the magnetic field being applied to a location to be welded. For this purpose the welding gun (1) is equipped with a magnet being fixed or removably mounted to a muzzle of the welding gun. The magnet can be a permanent magnet (20) or an electromagnet (9, 21)

EP 0 167 150 A1

FIG. 1

Process for stud welding and
welding gun
---------------------------------------------------------------

This invention relates to a process for stud welding and
working thereof which are suited to welding operations
conducted on land or underwater.

When a stud bolt is welded to a parent metal surface, a
fused zone swells and firmly deposits around the stud bolt.
The strength of stud weld is influenced considerably by a
degree of firmness of deposit of the fused zone. When the
stud bolt is driven from the top to a place on the flat
base metal to be welded, there is no significant problem
because of an excess fused zone swells uniformly and ·
firmly deposits around the stud bolt. However, when position
is overhead or vertical, there are many cases in which uniformly swollen and firmly deposited zone cannot be formed
around the stud bolt because the fused zone flows downwardly
and is displaced. This causes falling off of the stud bolt
during its use and heaping-up welding work for reinforcement
is required for preventing this trouble. Thus, the prior art
is not efficient.

This invention is to eliminate the abovementioned drawbacks.
An object of the present invention is to provide "a process
for welding a stud bolt on a base metal made of a magnetic material characterized in that the welding is carried out with the magnetic field being applied to a location to be welded". Another object of this invention is to provide "a welding gun for stud welding characterized in that the gun is equipped with a magnet being fixed or removably mounted to a muzzle of the welding gun".

Now the present invention will be described in detail by way of examples by referring to the accompanying drawings.

Fig. 1     is a schematic view illustrating the structure of an example of this invention;

Fig. 2 to 4     are partially omitted sectional views showing the welding process of this invention;

Fig. 5     is a partially omitted sectional view showing another example of this invention; and

Fig. 6     is a partially omitted sectional view showing a further example of this invention.

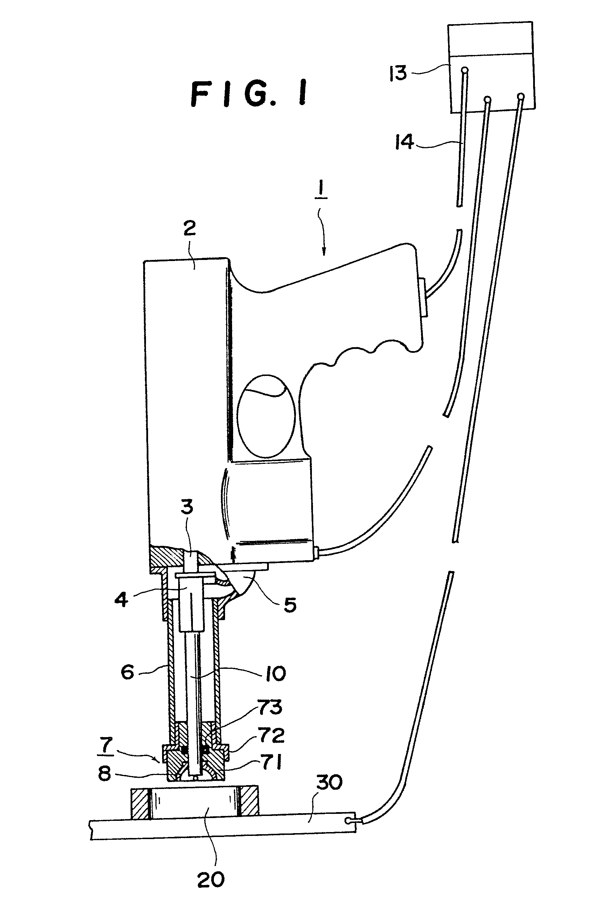

Fig. 1 shows one example of this invention used for underwater welding operations.

Numeral 1 is a stud welding gun. A piston rod 3, a chuck 4, a cover 5 and a gun barrel 6 fixed to the cover 5 are mounted to the front zone of a gun body 2 water-tightly. Numeral 71 is a water sealing member made of a heat resisting elastic material secured to a gun muzzle 7 of the gun barrel 6 by metal fixtures 72, and a fused end of its through-hole is formed in a curved recess. Numeral 8 is an arc shield having a non-through-hole and fixedly fitted into the curved recess. A stud bolt 10 penetrates through the water sealing member 71 water-tightly, and the stud bolt base is secured by the chuck 4 and having its forward end abutting the inside of the arc shield 8. Further, known stud bolt pressing mechanism and mechanical power switch are built inside the gun body 2. Numeral 30 is a parent metal made of magnetic material, such as an iron or a stainless steel plate. Numeral 20 is a cylindrical permanent magnet stuck to be base metal surface so that the magnet can surround the place to be welded. Numeral 13 is an electrical control mechanism installed on land for adjusting the electric current for welding.

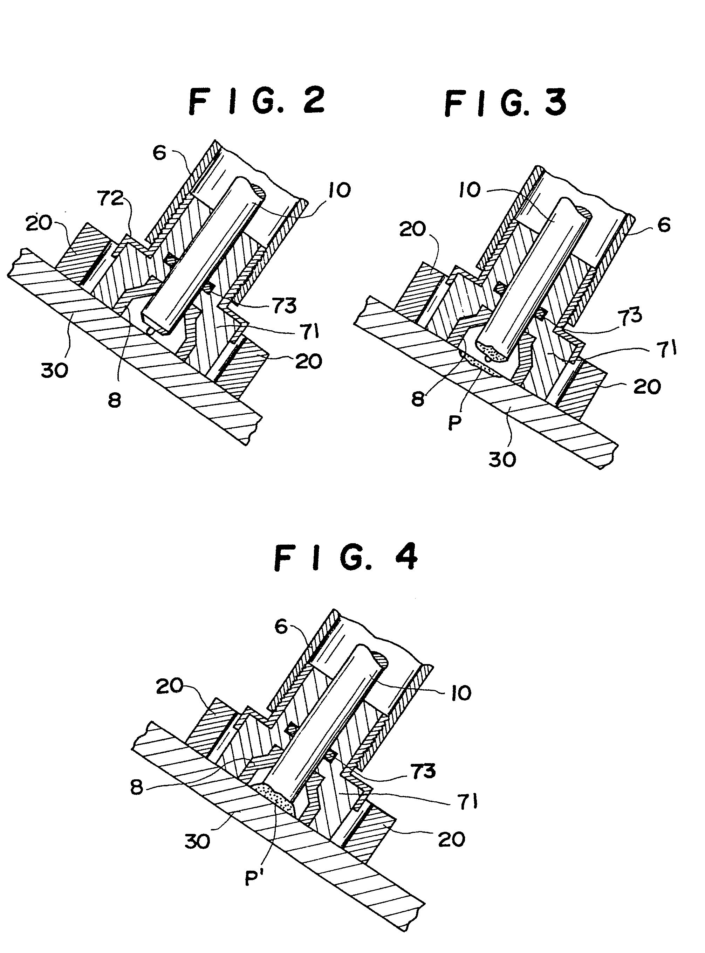

Welding operations are carried out in the same way as the usual stud welding process. However, the present invention is particularly effective when the place on the base metal to be welded is in an inclined or vertical position as shown in fig. 2 to 4.

In Fig. 2, the permanent magnet 20 is arranged to stick to the parent metal surface so that the magnet can surround the place on the parent metal to be welded.

The gun muzzle 7 is aimed at the place to be welded in close contact therewith and the electric current is applied to the muzzle, the base metal 30 and the stud bolt 10 are fused by the arc discharge and resistance heat. In the next moment, the electric current is turned off and the stud bolt is pulled upwardly slightly (fig. 3) and immediately driven into a fused zone (P) of the parent metal, whereupon the base metal combines with the fused zone of the stud bolt together and, at the same time, an excess fused zone (P') swells around the stud bolt (fig. 4). At this moment, the excess fused zone (P') is apt to slip downwardly in a direction of lower right in the drawings. However, the swollen excess fused zone (P') is attracted toward the base metal surface by the magnetic field produced in the parent metal 30 which is surrounded by the permanent magnet thereby to prevent the excess fused zone from flowing and displacing in the slipping direction. Hence, the swollen fused zone (P') is solidified with the stud bolt being driven in, and the uniform swollen zone is formed around the stud bolt.

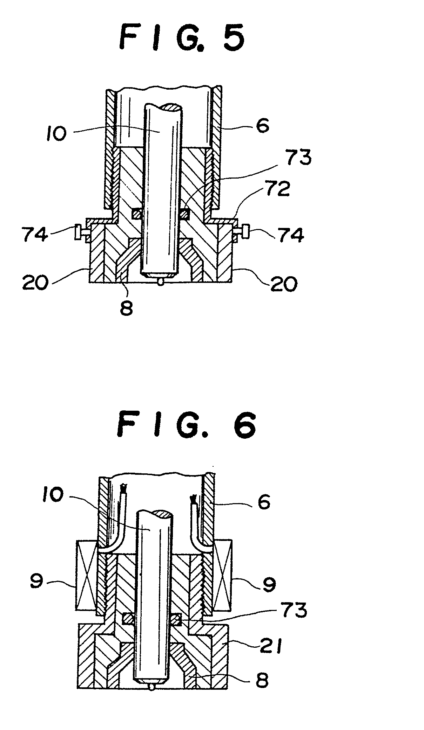

Fig. 5 shows another example wherein the permanent magnet 20 is releasably mounted to the welding gun and metal mounting fixtures 72 by clamping bolts 74. This example also provides the same effects as the abovementioned first example. Fig. 6 shows a further example wherein the electromagnet is used. Numeral 9 is an electrical conducting coil zone that is wound around the neighborhood of the fused end of the gun barrel 6. Numeral 21 is a non-retentivity member made of, for example, a pure iron, having its base mounted in the forward end of the gun barrel zone 6 and having a configuration that its forward end can contact with the base metal. When the electric current is applied to the coil zone, it provides the same effects as that of the permanent magnet. Numeral 73 is 0-ring.

According to the present invention, a stabilized and uniform welding strength can be obtained regardless of whether the surface to be welded is inclined, and the welding can be carried out even at the undersurface of the base metal. Further, the same welding operation as the conventional operation can be performed without any welding mistake. Hence the operation efficiency is greatly improved. Also, due to the simple construction the present invention practically provides such effects as lower cost and easy application to the known welding gun.

Claims
----------------

1.   A process for welding a stud bolt on a base metal made of a magnetic material characterized in that the welding is carried out with the magnetic field being applied to a location to be welded.

2.   The process according to claim 1 wherein the magnetic field is produced by applying a permanent magnet.

3.   The process according to claim 1 wherein the magnetic field is produced by applying an electromagnet.

4.   A welding gun for stud welding characterized in that the gun is equipped with a magnet being fixed or removably mounted to a muzzle of the welding gun.

5.   The welding gun according to claim 4 wherein the magnet comprises a permanent magnet.

6.   The welding gun according to claim 4 wherein the magnet comprises an electromagnet.

# FIG. 1

2/3   0167150

# FIG. 2

# FIG. 3

# FIG. 4

# F I G. 5

# F I G. 6

# EUROPEAN SEARCH REPORT

European Patent Office

Application number

**EP 85108197.6**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US - A - 2 473 871 (H.EDELS) <br> * Fig., pos. 18 * | 1,3,4,6 | B 23 K 9/20 |
| A | | 2,5 | |
| A | GB - A - 2 038 686 (CENTRAL) <br> * Abstract * | | |

| | |
|---|---|
| | TECHNICAL FIELDS SEARCHED (Int Cl 4) |
| | B 23 K 9/00 |

The present search report has been drawn up for all claims

| Place of search | Date of completion of the search | Examiner |
|---|---|---|
| VIENNA | 23-09-1985 | BENCZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document